# EUROPEAN PATENT SPECIFICATION

(11) **EP 4 657 371 B1**
(45) Date of publication and mention of the grant of the patent: **16.09.2026**
(21) Application number: 25178701.6
(22) Date of filing: 26.05.2025
(51) Int. Cl.: G06T 7/00, G06T 7/11, G06T 7/136, G06T 7/168

(54) **DEVICE FOR EVALUATING QUALITIES OF RADIOGRAPHIC TESTING IMAGE AND METHOD THEREFOR**
VORRICHTUNG ZUR BEURTEILUNG DER QUALITÄTEN EINES RADIOGRAPHISCHEN PRÜFBILDES UND VERFAHREN DAFÜR
DISPOSITIF D'ÉVALUATION DES QUALITÉS D'UNE IMAGE RADIOGRAPHIQUE D'ESSAI ET PROCÉDÉ ASSOCIÉ

(30) Priority: 28.05.2024 KR 20240069330; 23.08.2024 KR 20240113379
(43) Date of publication of application: 03.12.2025
(73) Proprietor: Doosan Enerbility Co., Ltd., Seongsan-gu Changwon-si, Gyeongsangnam-do 51711 (KR)
(72) Inventor: JIN, Sung Wook, Seoul 06114 (KR); YU, Jun Sang, Seongnam-si 13607 (KR)
(74) Representative: Ter Meer Steinmeister & Partner

(56) References cited:
- CN-A- 115 266 774
- CN-A- 116 485 872
- BANIUKIEWICZ PIOTR: "Automatic segmentation of radiographic images in industrial applications", ARCHIWUM ELEKTROTECHNIKI, vol. 60, no. 3, 1 September 2011 (2011-09-01), Warszawa, PL, pages 349 - 356, XP093141198, ISSN: 0004-0746, DOI: 10.2478/v10171-011-0030-7
- ZAITOUN NIDA M. ET AL: "Survey on Image Segmentation Techniques", PROCEDIA COMPUTER SCIENCE, vol. 65, 9 October 2015 (2015-10-09), AMSTERDAM, NL, pages 797 - 806, XP093351046, ISSN: 1877-0509, DOI: 10.1016/j.procs.2015.09.027

## Description

### BACKGROUND

### Field of the Invention

The present disclosure relates to an image quality evaluation technology and, more particularly, to a device for evaluating quality of a radiographic testing film image and a method therefor.

### Description of the Related Art

Image Quality Indicator (IQI) testing is a procedure used to evaluate quality of an image captured by non-destructive radiographic testing and to verify the resolution and clarity of the image, and is a procedure in which a skilled inspector directly and visually inspects the quality of an analog radiographic image captured.
CN 116 485 872 A provides an image scale calculation method based on wire diameter measurement of a wire type image quality indicator. The method comprises the following steps: step 1, preprocessing a ray image containing a silk type image quality indicator; step 2, selecting a local area of the image quality indicator as an ROI through a rectangular frame; step 3, carrying out binarization processing on the ROI obtained in the step 2; step 4, detecting a straight line and end point coordinates of a result obtained in the step 3 by adopting a straight line detection method; step 5, the slope of the obtained straight line is calculated, and the wire diameter of the wire type image quality indicator is solved through a trigonometric function; and step 6, calculating a proportional scale according to the model of the image quality indicator and the nominal wire diameter.

### SUMMARY

An objective of the present disclosure is to provide a device for evaluating quality of a radiographic testing film image and a method therefor. The invention is defined by the independent claim.

According to a preferred exemplary embodiment of the present disclosure to achieve the above-described objective, there is provided a method for quality evaluation, the method including: when a wire area image is input which is an image of an area where wires of each Image Quality Indicator (IQI) exist in a radiographic image of a target object that is attached with one or more image quality indicators and radiographed through radiation, preprocessing, e.g. by a preprocessing unit, the wire area image; binarizing, e.g. by a binarization unit, the wire area image; detecting, e.g. by a line detection unit, lines in the wire area image; counting, e.g. by a counting unit, the number of wires of each image quality indicator according to the detected lines; and evaluating, e.g. by an evaluation unit, quality of the radiographic image according to the number of counted wires.

The detecting of the lines of wires includes: transforming, e.g. by the line detection unit, pixels of the wire area image by a polar coordinate system, so as to generate a plurality of curves, organizing points where the plurality of generated curves intersect into an accumulation array, and detecting a plurality of lines from a plurality of points whose accumulation array value is greater than or equal to a threshold value; and performing, e.g. by the line detection unit, clustering based on a density of the plurality of detected lines, so as to cluster the plurality of detected lines into one or more line clusters.

In the counting of the number of wires of each image quality indicator, the number of wires of each image quality indicator according to the number of the line clusters may be counted.

The preprocessing of the wire area image may include: normalizing, e.g. by the preprocessing unit, the wire area image so as to convert the wire area image in a preset format; and performing, e.g. by the preprocessing unit, image processing on the wire area image so as to highlight a difference between pixels constituting the lines in the wire area image and the remaining pixels therein.

The normalizing of the wire area image may include: rotating, e.g. by the preprocessing unit, the wire area image in a preset direction; and/or resizing, e.g. by the preprocessing unit, the wire area image to a preset size.

The performing of the image processing may include at least one of: performing, e.g. by the preprocessing unit, a process of Contrast Limited Adaptive Histogram Equalization (CLAHE) on the wire area image so as to increase clarity of the lines existing in the wire area image, removing noise from the radiographic image, and increasing brightness and contrast; performing, e.g. by the preprocessing unit, filtering by using one or more filters in a frequency domain of the wire area image; and performing, e.g. by the preprocessing unit, filtering using a Sobel filter in upper and lower directions with respect to a Y-axis in the wire area image so as to detect a boundary of a vertical component of each line existing in the wire area image.

The performing of the filtering by using the one or more filters may include: transforming, e.g. by the preprocessing unit, the wire area image by the frequency domain, so as to generate a frequency domain image; performing, e.g. by the preprocessing unit, frequency domain filtering by using a composite filter combining filters of at least two of a low-pass filter for allowing only low-band components of the frequency domain image to pass through, a vertical weight filter for multiplying the vertical component in the frequency domain image by a predetermined weight, a hourglass-shaped filter for performing elimination of upper and lower areas among areas divided by two different line segments passing through a reference point while being vertically symmetrical with respect to the reference point in the frequency domain image, and a Butterworth filter for maximally reducing phase distortion in a boundary area of a frequency being filtered in the frequency domain image; and reversely transforming, e.g. by the preprocessing unit, the frequency domain image from the frequency domain to a time domain.

The Butterworth filter may be created according to the Equation: $G \left(w\right) = \frac{1}{\sqrt{1 + {w}^{2 n}}} ,$ where w denotes the frequency and n denotes a filtering order.

The binarizing of the wire area image includes binarizing, e.g. by the binarization unit, the wire area image by setting upper pixel values having a predetermined ratio in a pixel-value distribution of the wire area image as a threshold value.

The binarizing of the wire area image may further include performing, e.g. by the binarization unit, a morphology operation on the wire area image after the performing of the elimination. The morphology operation may include at least one of an erosion operation for removing noise from the wire area image and a dilatation operation for expanding the lines of the wire area image.

In the evaluating of the quality of the radiographic image, it may be determined, e.g. by the evaluation unit, that the quality of the radiographic image is suitable for performing a defect test in a case where the number of counted wires is greater than or equal to a reference value of a predefined standard, and/or that the quality of the radiographic image is unsuitable for performing the defect test in a case where the number of counted wires is less than the reference value of the predefined standard.

According to the preferred exemplary embodiment of the present disclosure to achieve the above-described objective, there is provided a device for quality evaluation, the device including: when a wire area image is input which is an image of an area where wires of each Image Quality Indicator (IQI) exist in a radiographic image of a target object that is attached with one or more image quality indicators and radiographed through radiation, a preprocessing unit for preprocessing the wire area image; a binarization unit for binarizing the wire area image; a line detection unit for detecting lines in the wire area image; a counting unit for counting the number of wires of each image quality indicator according to the detected lines; and an evaluation unit for evaluating quality of the radiographic image according to the number of counted wires.

The line detection unit transforms pixels of the wire area image by a polar coordinate system, so that a plurality of curves is generated, organize points where the plurality of generated curves intersect into an accumulation array, detect a plurality of lines from a plurality of points whose accumulation array value is greater than or equal to a threshold value, and perform clustering based on a density of the plurality of detected lines, so that the plurality of detected lines is clustered into one or more line clusters.

The counting unit may count the number of wires of each image quality indicator according to the number of the line clusters.

The preprocessing unit may normalize the wire area image so that the wire area image is converted in a preset format, and perform image processing on the wire area image so that a difference between pixels constituting the lines in the wire area image and the remaining pixels therein is highlighted.

The preprocessing unit may rotate the wire area image in a preset direction, and resize the wire area image to a preset size.

The preprocessing unit may perform a process of Contrast Limited Adaptive Histogram Equalization (CLAHE) on the wire area image so that clarity of the lines existing in the wire area image is increased, remove noise from the radiographic image, increase brightness and contrast, perform filtering by using one or more filters in a frequency domain of the wire area image, and perform filtering using a Sobel filter in upper and lower directions with respect to a Y-axis in the wire area image so that a boundary of a vertical component of each line existing in the wire area image is detected.

The preprocessing unit may transform the wire area image in a frequency domain, so that a frequency domain image is generated, perform frequency domain filtering by using a composite filter combining filters of a low-pass filter for allowing only low-band components of the frequency domain image to pass through, a vertical weight filter for multiplying the vertical component in the frequency domain image by a predetermined weight, a hourglass-shaped filter for performing elimination of upper and lower areas among areas divided by two different line segments passing through a reference point while being vertically symmetrical with respect to the reference point in the frequency domain image, and a Butterworth filter for maximally reducing phase distortion in a boundary area of a frequency being filtered in the frequency domain image, and reversely transform the frequency domain image from the frequency domain to a time domain.

The Butterworth filter may be created according to the Equation: $G \left(w\right) = \frac{1}{\sqrt{1 + {w}^{2 n}}} ,$ where w denotes the frequency and n denotes a filtering order.

The binarization unit may binarize the wire area image by setting upper pixel values having a predetermined ratio in a pixel-value distribution of the wire area image as a threshold value.

The binarization unit may perform a morphology operation on the wire area image, and the morphology operation may include at least one of an erosion operation for additionally removing noise from the wire area image and a dilatation operation for expanding the lines of the wire area image.

The evaluation unit determines that the quality of the radiographic image is suitable for performing a defect test in a case where the number of counted wires is greater than or equal to a reference value of a predefined standard, and the quality of the radiographic image is unsuitable for performing the defect test in a case where the number of counted wires is less than the reference value of the predefined standard.

According to the present disclosure, compared to the procedure in which an inspector performs evaluation with his or her naked eyes, the counting of the number of wires of an image quality indicator (IQI) may be performed through image processing, thereby shortening the inspection time and obtaining objectified results.

### BRIEF DESCRIPTION OF THE DRAWINGS

FIG. 1 is a view illustrating a configuration of a device for evaluating quality of a radiographic testing film image according to an exemplary embodiment of the present disclosure.
FIG. 2 is a view illustrating a detailed configuration of the device for evaluating the quality of the radiographic testing film image according to the exemplary embodiment of the present disclosure.
FIG. 3 is a view illustrating a detection model for evaluating the quality of the radiographic testing film image according to the exemplary embodiment of the present disclosure.
FIG. 4 is a flowchart illustrating a method for generating the detection model according to the exemplary embodiment of the present disclosure.
FIG. 5 is a flowchart illustrating a method for digitizing a radiographic testing film according to the exemplary embodiment of the present disclosure.
FIG. 6 is a flowchart illustrating a method for evaluating quality of a radiographic testing film image based on a learning model according to the exemplary embodiment of the present disclosure.
FIG. 7 is an example screen illustrating a method for specifying a wire area according to the exemplary embodiment of the present disclosure.
FIG. 8 is a flowchart illustrating a method for counting the number of wires included in the wire area image according to the exemplary embodiment of the present disclosure.
FIG. 9, FIG. 10, FIG. 11, FIG. 12, FIG. 13, FIG. 14, FIG. 15, FIG. 16, and FIG. 17 are example screens illustrating the method for counting the number of wires included in the wire area image according to the exemplary embodiment of the present disclosure.
FIG. 18 is a view illustrating a computing device according to the exemplary embodiment of the present disclosure.

### DETAILED DESCRIPTION

The present disclosure may be modified in various ways and may have various exemplary embodiments, and thus a specific exemplary embodiment will be exemplified and described in detail in the detailed description. However, this is not intended to limit the present disclosure to a particular disclosed form. The scope of the invention is defined by the appended claims

The terminology used in the present disclosure is for the purpose of describing the specific exemplary embodiment only and is not intended to be limiting. As used herein, the singular forms are intended to include the plural forms as well, unless the context clearly indicates otherwise. In addition, it will be further understood that the terms "comprise," "include," "have," etc. when used in the present disclosure, specify the presence of stated features, integers, steps, operations, components, parts, and/or combinations thereof, but do not preclude the possibility of the presence or addition of one or more other features, integers, steps, operations, components, parts, and/or combinations thereof.

Particularly, the terms or words used in the present specification and claims are not to be construed as being limited to their ordinary or dictionary meanings, and should be interpreted as meanings and concepts corresponding to the technical idea of the present disclosure based on the principle that inventors may properly define the concept of each term in order to best describe their embodiments. In particular, in the exemplary embodiment of the present disclosure, "estimation" means deriving a result calculated according to what the learning model LM (i.e., Machine learning model/Deep learning model) has learned.

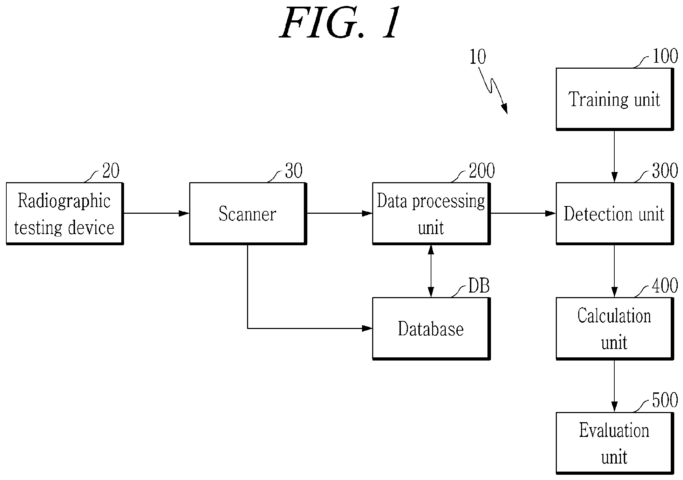

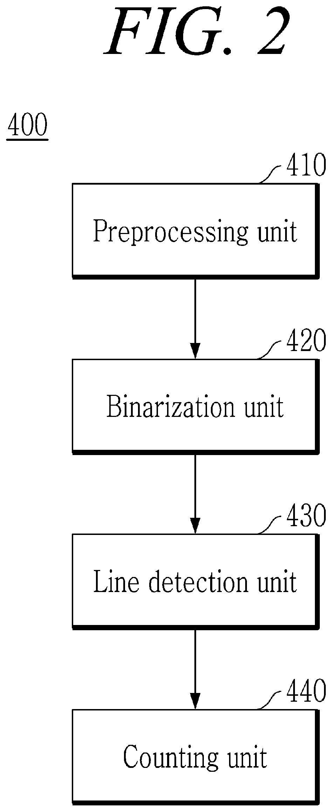

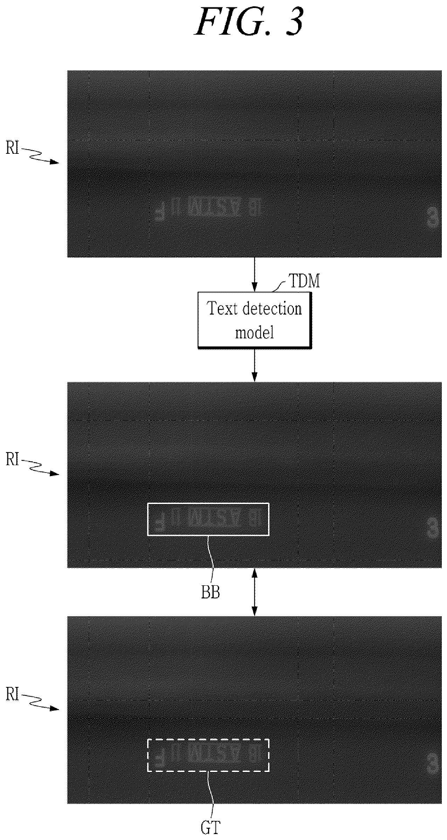

First, a device for evaluating quality of a radiographic testing film image according to an exemplary embodiment of the present disclosure will be described. FIG. 1 is a view illustrating a configuration of the device for evaluating the quality of the radiographic testing film image according to the exemplary embodiment of the present disclosure. FIG. 2 is a view illustrating a detailed configuration of the device for evaluating the quality of the radiographic testing film image according to the exemplary embodiment of the present disclosure. FIG. 3 is a view illustrating a detection model for evaluating the quality of the radiographic testing film image according to the exemplary embodiment of the present disclosure.

According to the exemplary embodiment of the present disclosure, a device 10 (hereinafter referred to as an "evaluation device") for evaluating quality of a radiographic testing film image is for analyzing a generated radiographic image and evaluating whether the quality of the radiographic image is suitable for performing a defect test on a target object radiographed in the radiographic image, when a radiographic testing (RT) device 20 performs radiography on the target object attached with an image quality indicator (IQI) to derive a radiographic testing film in which the target object attached with the image quality indicator is radiographed and then a scanner 30 scans the radiographic testing film to generate a digitized radiographic image. To this end, the evaluation device 10 includes a training unit 100, a data processing unit 200, a detection unit 300, a calculation unit 400, and an evaluation unit 500.

The training unit 100 is for generating a detection model DM through learning (i.e., Deep Learning or Machine Learning). Examples of such a detection model DM may include a convolutional neural network (CNN), You Only Look Once (YOLO), region-based convolutional neural network (RCNN), Faster RCNN, etc. The detection model DM includes a plurality of layers (or modules) connected to each other, and the plurality of layers (or modules) is configured to perform a plurality of calculations. In addition, the plurality of layers (or modules) is connected to each other through weights W. That is, an output of a calculation result of any one layer (or module) is applied with a weight and used as an input for the calculation of the next layer thereof. The detection model DM derives the output by performing the plurality of calculations applied with weights between the plurality of layers (or modules) on input data. In other words, the learning model performs the plurality of calculations linked by the weights between the plurality of layers (or modules). The plurality of calculations linked by the weights between the plurality of layers (or modules) of such a detection model DM is referred to as "weight calculations."

Referring to FIG. 3, the image quality indicator has a text area composed of a text and a wire area composed of a plurality of wires. When a radiographic image RI is input into the detection model DM, the training unit 100 trains the detection model DM so that the detection model DM detects the text area, which is the area occupied by the text of the image quality indicator, from the input radiographic image RI through a bounding box BB. When the training for the detection model DM is completed, the training unit 100 provides the trained detection model DM to the detection unit 300.

The data processing unit 200 serves to receive input of not only the digitized radiographic image of the radiographic testing film where the target object attached with the image quality indicator is radiographed but also information about the target object corresponding to the radiographic image, and to map the input radiographic image and information about the target object, so as to store this image and information in a database DB. In addition, the data processing unit 200 may load the information about the target object mapped to the radiographic image from the database DB in order to evaluate the quality of the radiographic image.

The detection unit 300 may detect the text area of the image quality indicator from a radiographic image RI through the bounding box by using the detection model DM. Referring to FIG. 3, when the detection unit 300 inputs the radiographic image RI to the detection model DM, the detection model DM performs a weight calculation to which the trained weight is applied, and derives a detection vector. The detection vector represents the predicted area occupied by the text of the image quality indicator through the bounding box (e.g., BB) in the radiographic image for training. Accordingly, the detection unit 300 may detect the text area through the bounding box (e.g., BB). The detection unit 300 may specify, as a wire area ROI, an area having a predetermined width and height downward from the bounding box BB representing the text area with respect to a direction of the text of the detected image quality indicator.

The calculation unit 400 is for detecting the wire area ROI to generate a wire area image and counting the number of wires included in the generated wire area image. To this end, as shown in FIG. 2, the calculation unit 400 includes a preprocessing unit 410, a binarization unit 420, a line detection unit 430, and a counting unit 440. The specific operation of the calculation unit 400 that includes the preprocessing unit 410, binarization unit 420, line detection unit 430, and counting unit 440 will be described in more detail below.

In addition, the evaluation unit 500 is for determining the quality of the radiographic image according to the number of wires counted by the calculation unit 400. In this case, the evaluation unit 500 determines that the quality of the radiographic image is suitable for performing a defect test in a case where the number of counted wires is greater than or equal to a reference value of a predefined standard. In contrast, the evaluation unit 500 may determine that the quality of the radiographic image is unsuitable for performing the defect test in a case where the number of counted wires is less than the reference value of the predefined standard. That is, as the quality of the radiographic image improves, the number of wires that are truly identified increases, and as the quality of the radiographic image decreases, the number of wires that are truly identified decreases. Accordingly, the quality of the radiographic image may be determined by comparing the number of counted wires with the predefined standard and confirming whether the number of wires truly determined is greater than or equal to the reference value of the predefined standard. As described above, after determining the quality of the radiographic image, when the quality of the radiographic image is determined to be suitable for performing the defect test, the evaluation unit 500 may output a test command that allows analyzing the corresponding radiographic image and starting the defect test. In contrast, when the quality of the radiographic image is determined not to be suitable for performing the defect test, the evaluation unit 500 may output a rephotographing command to perform rephotographing.

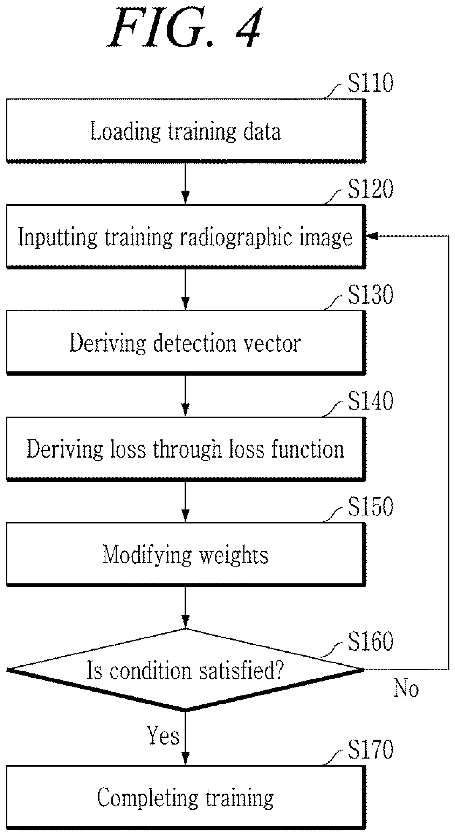

Next, a method for generating a detection model according to the exemplary embodiment of the present disclosure will be described. FIG. 4 is a flowchart illustrating the method for generating the detection model according to the exemplary embodiment of the present disclosure.

Referring to FIGS. 3 and 4, in step S110, a training unit 100 loads training data prepared in advance. The training data includes a training radiographic image RI and a target vector. The training radiographic image RI is an image of a radiographed target object attached with at least one image quality indicator. The target vector represents a target bounding box (e.g., GT) representing an area occupied by a text of the image quality indicator in the training radiographic image. For example, the target vector may express the bounding box through center coordinates, a width, and a height of the bounding box.

Next, in step S120, the training unit 100 inputs the training radiographic image into a detection model DM having a weight that has not been learned. Then, in step S130, the detection model DM derives a detection vector by performing, for the training radiographic image, a weight calculation that is applied with the weight that has not been learned. The detection vector is for predicting an area occupied by a text of the image quality indicator through the bounding box (e.g., BB) in the training radiographic image. As shown in FIG. 3, the detection vector may be the bounding box (e.g., BB) representing the area occupied by the text in the training radiographic image (e.g., RI). For example, the detection vector includes center coordinates, a width, and a height of the bounding box representing the area occupied by the text in the image quality indicator.

Next, in step S140, the training unit 100 calculates a loss representing a difference between the target vector and the detection vector through a loss function. Then, in step S150, the training unit 100 performs optimization to modify the weights of the detection model DM, so that the loss derived through the loss function is maximally reduced.

Next, in step S160, the training unit 100 determines whether a training completion condition is satisfied. According to the exemplary embodiment, the training completion condition may be a case where a predetermined learning rate is exceeded and the loss calculated previously in step S140 converges to be less than or equal to a preset target value. As a result of determination in step S160, when the training completion condition is not satisfied, steps S120 to S150 described above are iteratively performed by using a plurality of training data different from each other. In contrast, in step S170, the training unit 100 completes the training for the detection model DM when the result of determination in step S160 satisfies the training completion condition.

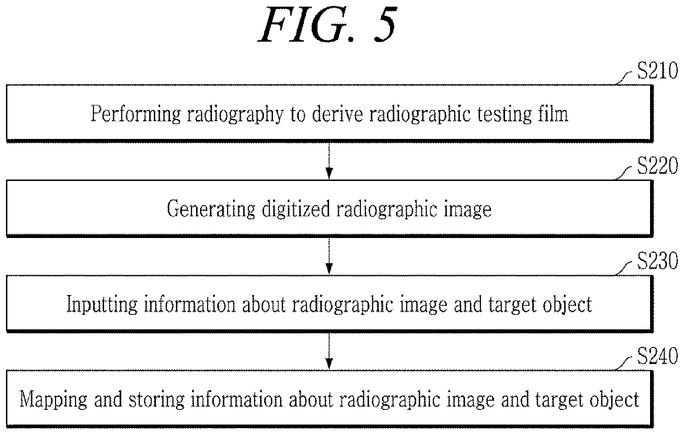

Next, a method for digitizing a radiographic testing (RT) film according to the exemplary embodiment of the present disclosure will be described. FIG. 5 is a flowchart illustrating the method for digitizing the radiographic testing film according to the exemplary embodiment of the present disclosure.

Referring to FIG. 5, in step S210, the radiographic testing (RT) device 20 is used to perform radiography of the target object attached with the image quality indicator (IQI), and to derive a radiographic testing film in which the target object attached with the image quality indicator is radiographed. Here, the target object may be exemplified as a pipe, tube, etc.

Then, in step S220, a scanner 30 scans the radiographic testing film, so as to generate a digitized radiographic image.

After the radiographic image is generated, in step S230, a data processing unit 200 may receive information about the digitized radiographic image and the target object that is a basis of the radiographic image. Here, the information about the target object may include, for example, facility information, specifications of the target object such as the pipe and the tube, a radiography location, and a radiation condition of the radiography. In particular, the information about the target object includes at least the specifications of the target object such as the pipe and the tube. The specifications of the target object include a shape or a thickness of the target object.

In this case, the digitized radiographic image may be input directly from the scanner 30 or input through other media. In addition, the information about the target object of the radiographic image may be input by a user. In this way, in step S240, when the digitized radiographic image and the information about the target object of the radiographic image are input, the data processing unit 200 may map the radiographic image and information about the target object corresponding to the radiographic image, and then store this image and information in a database DB.

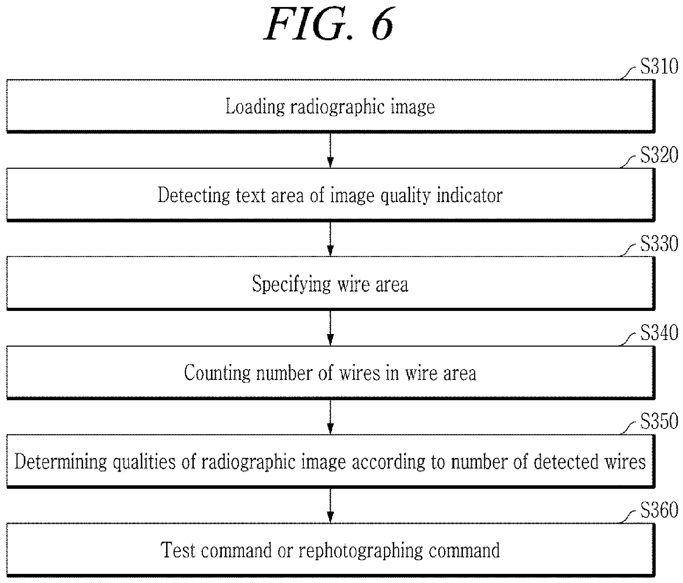

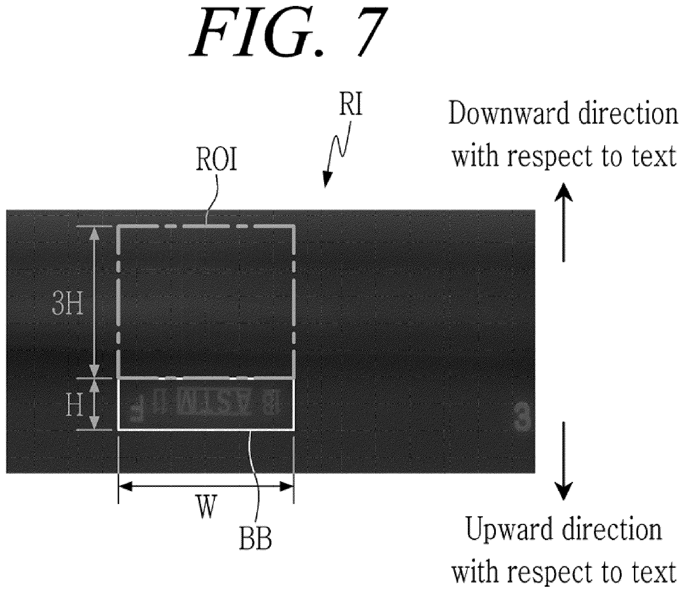

Next, a method for evaluating quality of a radiographic testing film image according to the exemplary embodiment of the present disclosure will be described. FIG. 6 is a flowchart illustrating the method for evaluating the quality of the radiographic testing film image based on a learning model according to the exemplary embodiment of the present disclosure. FIG. 7 is an example screen illustrating a method for specifying a wire area according to the exemplary embodiment of the present disclosure.

Referring to FIG. 6, in step S310, the data processing unit 200 loads the radiographic image from the database DB. The radiographic image RI is the digitized radiographic testing film in which the target object attached with the image quality indicator (IQI) is radiographed. Accordingly, the radiographic image is also an image in which the target object attached with the image quality indicator (IQI) is radiographed.

Next, in step S320, a detection unit 300 detects a text area of the image quality indicator through the bounding box from the radiographic image RI by using the detection model DM. That is, when the detection unit 300 inputs the radiographic image RI to the detection model DM, the detection model DM performs a weight calculation to which a trained weight is applied, so as to derive a detection vector. As shown in FIG. 3, the detection vector is for predicting an area occupied by the text of the image quality indicator through the bounding box (e.g., BB) in the training radiographic image. Accordingly, the detection unit 300 may detect the text area through the bounding box (e.g., BB).

Next, in step S330, the detection unit 300 specifies, as a wire area, an area having a predetermined width and height downward from the bounding box BB representing the text area with respect to a direction of the text of the image quality indicator selected for a test subject, and extracts the specified wire area to generate a wire area image. As shown in FIG. 7, based on a text "ASTM 11F" of the image quality indicator for the test subject, an upward direction of the text is a downward direction of the radiographic image in FIG. 7, and a downward direction of the text is an upward direction of the radiographic image in FIG. 7. The detection unit 300 may specify, as the wire area ROI, a predetermined area from the bounding box BB representing the text area, for example, an area having a width equal to a width W of the bounding box BB representing the text, and a height (i.e., 3 H) three times a height H of the bounding box BB representing the text area.

In step S340, a calculation unit 400 counts the number of wires included in the wire area image when the wire area is specified and then the wire area image is generated. Step S340 will be described in more detail below.

Next, in step S350, an evaluation unit 500 determines the quality of the radiographic image according to the number of wires counted previously in step S340. In this case, the evaluation unit 500 determines that the quality of the radiographic image is suitable for performing a defect test in a case where the number of wires, which is previously counted in step S340, is greater than or equal to a reference value of a predefined standard. In contrast, the evaluation unit 500 may determine that the quality of the radiographic image is unsuitable for performing the defect test in a case where the number of wires, which is previously counted in step 340, is less than the reference value of the predefined standard. That is, as the quality of the radiographic image improves, the number of counted wires increases, and as the quality of the radiographic image decreases, the number of counted wires decreases. Accordingly, the quality of the radiographic image may be determined by comparing the number of counted wires with the predefined standard and confirming whether the number of counted wires is greater than or equal to the reference value of the predefined standard.

In step S360, when the quality of the radiographic image is determined to be suitable for performing the defect test, the evaluation unit 500 outputs a test command that allows analyzing the corresponding radiographic image and starting the defect test. In contrast, when the quality of the radiographic image is determined not to be suitable for performing the defect test, the evaluation unit 500 outputs a rephotographing command to perform rephotographing.

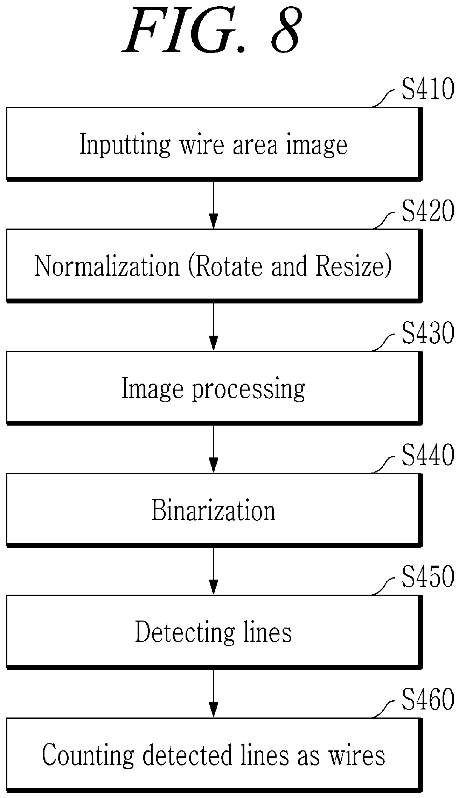

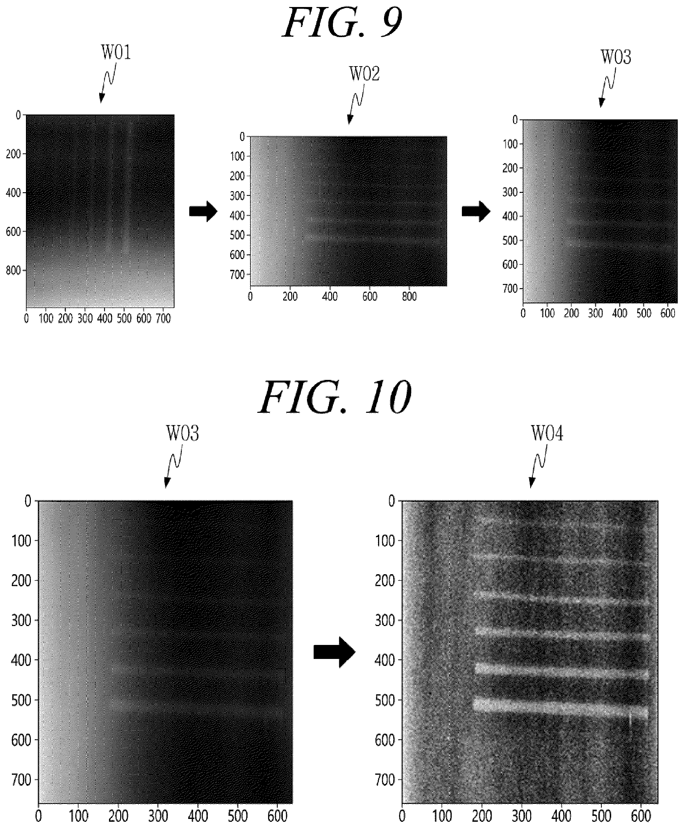

Then, a method for counting the number of wires included in the wire area image in step S340 is described below. FIG. 8 is a flowchart illustrating the method for counting the number of wires included in the wire area image according to the exemplary embodiment of the present disclosure. FIGS. 9 to 17 are example screens illustrating the method for counting the number of wires included in the wire area image according to the exemplary embodiment of the present disclosure.

As described above, the wire area may be specified and then the wire area image may be generated. The wire area image is an image of the area where wires of each image quality indicator exist in the radiographic image where the target object attached with one or more image quality indicators (IQIs) is radiographed through radiation.

Referring to FIGS. 8 to 17, the wire area image is generated, and then in step S410, the wire area image may be input into the calculation unit 400. Accordingly, a preprocessing unit 410 of the calculation unit 400 performs preprocessing on the input wire area image.

To this end, in step S420, the preprocessing unit 410 normalizes the wire area image so that the wire area image is converted to an image in a preset format. Step S420 is described in more detail with reference to FIG. 9 as follows.

As shown in FIG. 9, first, the preprocessing unit 410 rotates a wire area image WO1 in a preset direction. As a result, a rotated wire area image WO2 is derived. That is, the preprocessing unit 410 rotates the wire area image WO1 so that wires in the wire area image WO1 are oriented in a horizontal direction. Then, the preprocessing unit 410 resizes the rotated wire area image WO2 to have a preset size thereof. As a result, a resized wire area image WO3 is derived.

In step S430, when the normalization is achieved through the rotation and resizing, the preprocessing unit 410 performs image processing on the wire area image so that differences between pixels forming each line and the remaining pixels in the wire area image are highlighted.

Step S430 is described in more detail with reference to FIGS. 9 to 13 as follows.

First, the preprocessing unit 410 performs a process of Contrast Limited Adaptive Histogram Equalization (CLAHE) on the wire area image WO3 so as to increase the clarity of lines existing in the resized wire area image WO3, remove noise from the radiographic image, and derive a wire area image WO4 having increased brightness and contrast.

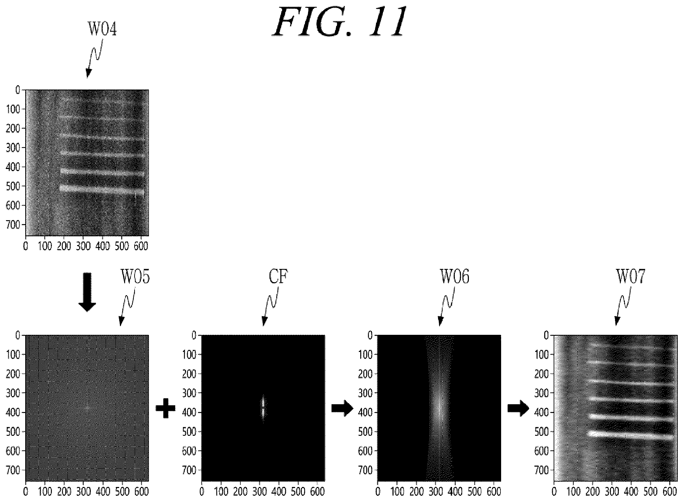

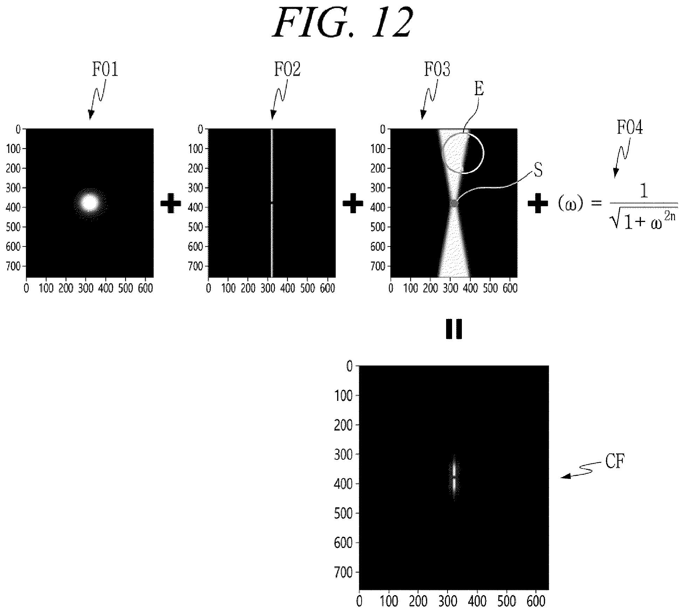

Then, referring to FIGS. 11 and 12, the preprocessing unit 410 performs filtering by using one or more filters in a frequency domain of the wire area image WO4.

In this case, the preprocessing unit 410 converts the wire area image WO4 by the frequency domain, so as to generate a frequency domain image WO5.

Thereafter, as shown in FIG. 12, the preprocessing unit 410 generates a composite filter CF by combining filters of a low-pass filter F01 for allowing only low-band components of the frequency domain image WO5 to pass through, a vertical weight filter F02 for multiplying the vertical component of the frequency domain image WO5 by a predetermined weight, a hourglass-shaped filter F03 for performing elimination of upper and lower areas among areas divided by two different line segments passing through a reference point S (e.g., a center point of the frequency domain image WO5) while being vertically symmetrical with respect to the reference point in the frequency domain image WO5, and a Butterworth filter F04 for maximally reducing phase distortion in a boundary area of a frequency being filtered in the frequency domain image WO5, performs frequency domain filtering for the frequency area image WO5 by using such a composite filter CF, and derives a frequency domain image WO6 filtered in the frequency domain.

In this case, the Butterworth filter is created on the basis of the following Equation: $G \left(w\right) = \frac{1}{\sqrt{1 + {w}^{2 n}}}$ Here, w denotes a frequency and n denotes a filtering order.

As described above, when the frequency domain filtering is completed, the preprocessing unit 410 reversely transforms the frequency domain image WO6 from the frequency domain to a time domain, so as to derive a frequency domain-filtered wire area image WO7.

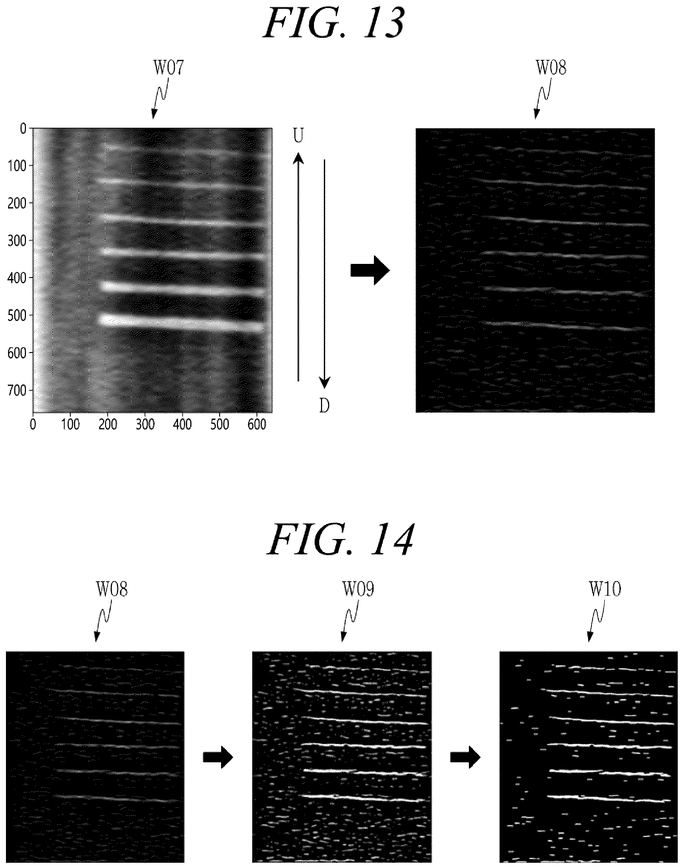

As described above, when the frequency domain filtering is completed, as shown in FIG. 13, the preprocessing unit 410 performs filtering using the Sobel filter in both directions including upper U and lower D directions with respect to a Y axis in the wire area image WO7, so as to detect a boundary of a vertical component of each line existing in the wire area image WO7. In this way, a wire area image WO8 in which the boundary of the vertical component of each line is detected is derived.

Next, in step S440, a binarization unit 420 of the calculation unit 400 binarizes the wire area image WO8 to derive a binarized wire area image. The binarization in Step S440 is described in more detail with reference to FIG. 14 as follows.

First, as shown in FIG. 14, the binarization unit 420 binarizes the wire area image WO8 by setting an upper pixel value having a predetermined ratio in a pixel-value distribution of the wire area image WO8 as a threshold value, thereby deriving a binarized wire area image WO9. That is, the binarization unit 420 derives the wire area image WO9 by performing the binarization for pixels having pixel values greater than or equal to the threshold value and for the remaining pixels.

Next, as shown in FIG. 14, the binarization unit 420 performs morphological operations on the binarized wire area image WO9. As a result, a wire area image W10 to which the morphological operations are applied is derived. In such morphological operations, the binarization unit 420 may perform at least one of an erosion operation for removing noise from the wire area image WO9 and a dilatation operation for allowing the lines of the wire area image WO9 to be expanded, or may sequentially perform the erosion operation and the dilatation operation.

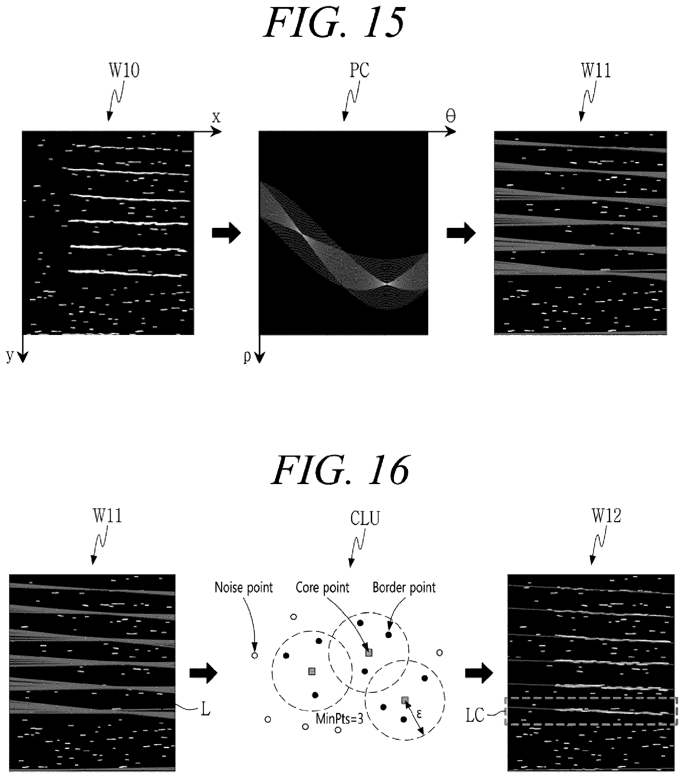

Next, in step S450, a line detection unit 430 detects each line in the wire area image. Step S450 is described in more detail with reference to FIGS. 15 to 17 as follows.

First, as shown in FIG. 15, the line detection unit 430 performs a Hough Transform to detect a plurality of lines. The line detection unit 430 generates a plurality of curves from a polar coordinate system image PC, which is transformed from the wire area image W10 of a two-dimensional rectangular coordinate system (i.e., a Cartesian coordinate system) to the image of the polar coordinate system. Then, the line detection unit 430 organizes points where the plurality of curves generated in the polar coordinate system image PC intersect into an accumulation array. Next, the polar coordinate system image PC maps the plurality of points whose accumulation array values are greater than or equal to a threshold value back to a wire area image W11 of the rectangular coordinate system, thereby detecting the plurality of lines.

Next, as shown in FIG. 16, the line detection unit 430 performs clustering CLU based on the density of the plurality of detected lines of the wire area image W11, thereby clustering the plurality of detected lines into one or more line clusters LC. In this case, it is preferable to use an algorithm of Density-based Spatial Clustering of Applications with Noise (DBSCAN) for the clustering. Based on such clustering, a wire area image W12 including one or more line clusters LC is derived.

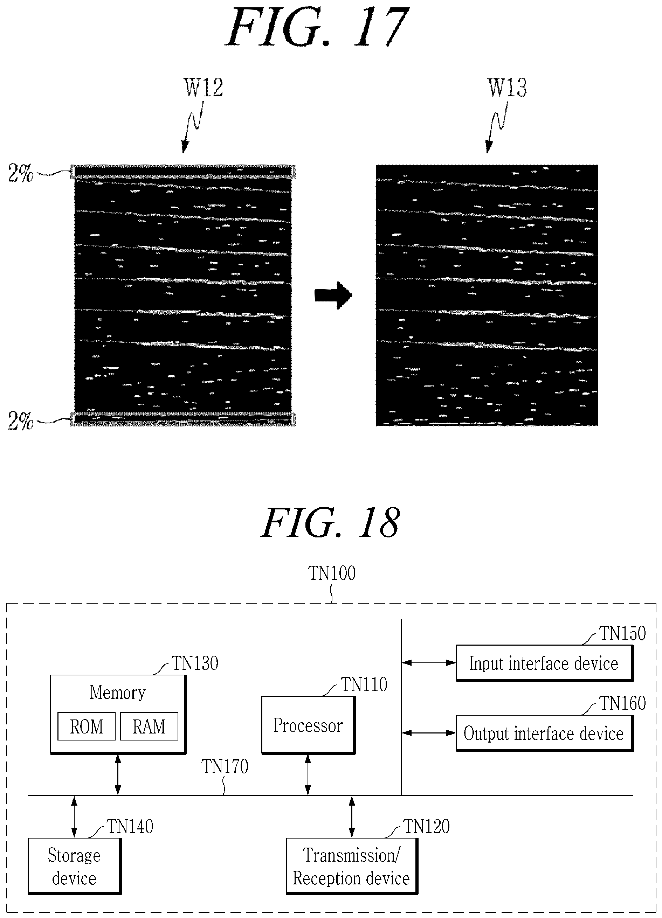

In addition, as shown in FIG. 17, the line detection unit 430 may additionally and selectively remove line clusters LC located in respective areas having a predetermined ratio (e.g., 2%) at upper and lower ends of the wire area image.

As described above, in step S460, when the line clusters are detected, a counting unit 440 counts the number of wires of the image quality indicator according to the number of line clusters.

FIG. 18 is a view illustrating a computing device according to the exemplary embodiment of the present disclosure. The computing device TN100 in FIG. 18 may be a device described in the present specification (e.g., the evaluation device 10, etc.).

In the exemplary embodiment of FIG. 18, the computing device TN100 may include at least one processor TN110, a transmission/reception device TN120, and a memory TN130. In addition, the computing device TN100 may further include a storage device TN140, an input interface device TN150, an output interface device TN160, etc. The components included in the computing device TN100 and connected to each other by a bus TN170 may communicate with each other.

The processor TN110 may execute program commands stored in at least one among the memory TN130 and the storage device TN140. The processor TN110 may refer to a central processing unit (CPU), a graphics processing unit (GPU), or a dedicated processor on which methods according to the exemplary embodiments of the present disclosure are performed. The processor TN110 may be configured to implement procedures, functions, methods, and the like which are described in conjunction with the exemplary embodiments of the present disclosure. The processor TN110 may control each component of the computing device TN100.

Each of the memory TN130 and the storage device TN140 may store various information related to the operation of the processor TN110. Each of the memory TN130 and the storage device TN140 may be composed of at least one among a volatile storage medium and a non-volatile storage medium. For example, the memory TN130 may be composed of at least one of read only memory (ROM) and random access memory (RAM).

The transmission/reception device TN120 may transmit or receive wired signals or wireless signals. The transmission/reception device TN120 may be connected to a network and perform communication.

In particular, according to the exemplary embodiment of the present disclosure, each of the training unit 100, data processing unit 200, detection unit 300, calculation unit 400, and evaluation unit 500 may be implemented in the form of a program readable by a computer means, be stored in the memory TN130, and then be executed in the processor TN110, or may be a sub-module of the processor TN110.

Meanwhile, various methods according to the exemplary embodiments of the present disclosure described above may be implemented in the form of programs readable through various computer means and be recorded on computer-readable recording media. Here, the recording media may store program commands, data files, data structures, etc., singly or in combination thereof. The program commands recorded on the recording media may be designed and configured specifically for the embodiments of the present disclosure or may be publicly known and available to those skilled in the art of computer software. For example, the recording media include: magnetic media such as hard disks, floppy disks, and magnetic tapes; optical media such as CD-ROMs and DVDs; magneto-optical media such as floptical disks; and a hardware device specially configured to store and execute program commands, the hardware device including such as ROM, RAM, flash memory, etc. Examples of the computer commands include not only machine language generated by a compiler, but also high-level language wires executable by a computer using an interpreter or the like. Such a hardware device described above may be configured to operate by using one or more software modules in order to perform the operation of the embodiments of the present disclosure, and vice versa.

The exemplary embodiments of the present disclosure have been described above, the scope the present invention is defined by the appended claims.

## Claims

1. A method for quality evaluation, the method comprising:
when a wire area image is input (S410), wherein the wire area image is an image of an area where wires of each image quality indicator exist in a radiographic image of a target object that is attached with one or more image quality indicators and radiographed through radiation, preprocessing the wire area image;
binarizing (S440) the wire area image;
detecting (S450) lines in the wire area image;
counting (S460) a number of wires of each image quality indicator according to the detected lines; and
evaluating (S350) a quality of the radiographic image according to the number of wires;
**characterized in that**:
- detecting (S450) lines in the wire area image comprises: transforming pixels of the wire area image by a polar coordinate system to generate a plurality of curves, organizing points where the plurality of curves intersect into an accumulation array, detecting a plurality of lines from a plurality of points whose accumulation array value is greater than or equal to a threshold value, and performing clustering based on a density of the plurality of lines, so as to cluster the plurality of lines into one or more line clusters.

2. The method of claim 1, wherein, in counting (S460) the number of wires of each image quality indicator, the number of wires of each image quality indicator according to a number of line clusters is counted.

3. The method according to any one of the preceding claims, wherein preprocessing of the wire area image comprises:
normalizing (S420) the wire area image to convert the wire area image in a preset format; and
performing (S430) image processing on the wire area image to highlight a difference between pixels constituting the lines in the wire area image and remaining pixels therein.

4. The method of claim 3, wherein normalizing (S420) the wire area image comprises:
rotating the wire area image in a preset direction; and/or
resizing the wire area image to a preset size.

5. The method of claim 3 or 4, wherein performing (S430) the image processing comprises at least one of:
performing a process of Contrast Limited Adaptive Histogram Equalization, CLAHE, on the wire area image to increase clarity of the lines existing in the wire area image, remove noise from the radiographic image, and increase brightness and contrast;
performing filtering by using one or more filters in a frequency domain of the wire area image;
and
performing filtering using a Sobel filter in upper and lower directions with respect to a Y-axis in the wire area image to detect a boundary of a vertical component of each line existing in the wire area image.

6. The method of claim 5, wherein performing filtering by using one or more filters comprises:
transforming the wire area image by the frequency domain to generate a frequency domain image;
performing frequency domain filtering by using a composite filter combining filters of at least two of: a low-pass filter for allowing only low-band components of the frequency domain image to pass through, a vertical weight filter for multiplying the vertical component in the frequency domain image by a predetermined weight, an hourglass-shaped filter for performing elimination of upper and lower areas among areas divided by two different line segments passing through a reference point while being vertically symmetrical with respect to the reference point in the frequency domain image, and a Butterworth filter for reducing phase distortion in a boundary area of a frequency being filtered in the frequency domain image; and
reversely transforming, by the preprocessing unit 410, the frequency domain image from the frequency domain to a time domain.

7. The method of claim 6, wherein the Butterworth filter is created according to an Equation: $G \left(w\right) = \frac{1}{\sqrt{1 + {w}^{2 n}}} ,$ where w denotes the frequency and n denotes a filtering order.

8. The method according to any one of the preceding claims, wherein binarizing the wire area image comprises binarizing the wire area image by setting upper pixel values having a predetermined ratio in a pixel-value distribution of the wire area image as a threshold value.

9. The method of claim 8, wherein binarizing (S440) the wire area image further comprises performing a morphology operation on the wire area image, and
the morphology operation comprises at least one of: an erosion operation for removing noise from the wire area image and a dilatation operation for expanding the lines of the wire area image.

10. A device for quality evaluation, the device comprising:
a preprocessing unit (410) configured to preprocess the wire area image, when a wire area image is input, wherein the wire area image is an image of an area where wires of each image quality indicator exist in a radiographic image of a target object that is attached with one or more image quality indicators and radiographed through radiation;
a binarization unit (420) configured to binarize the wire area image;
a line detection unit (430) configured to detect lines in the wire area image;
a counting unit (440) configured to count a number of wires of each image quality indicator according to the detected lines; and
an evaluation unit (500) configured to evaluate a quality of the radiographic image according to the number of wires;
**characterized in that**:
- the line detection unit (430) is configured to: transform pixels of the wire area image by a polar coordinate system to generate a plurality of curves, organize points where the plurality of curves intersect into an accumulation array, detect a plurality of lines from a plurality of points whose accumulation array value is greater than or equal to a threshold value, and perform clustering based on a density of the plurality of lines to cluster the plurality of lines into one or more line clusters.

11. The device of claim 10, wherein the counting unit (440) is configured to count the number of wires of each image quality indicator according to a number of line clusters.

12. The device of claim 10, wherein the preprocessing unit (410) is configured to:
normalize the wire area image to convert the wire area image in a preset format; and
perform image processing on the wire area image to highlight a difference between pixels constituting the lines in the wire area image and remaining pixels therein.

13. The device of claim 12, wherein the preprocessing unit (410) is configured to rotate the wire area image in a preset direction and resize the wire area image to a preset size.

## Patentansprüche

1. Verfahren zur Qualitätsbewertung, wobei das Verfahren Folgendes umfasst:
dann, wenn ein Drahtbereichsbild eingegeben wird (S410), wobei das Drahtbereichsbild ein Bild eines Bereichs ist, in dem Drähte jedes Bildqualitätsindikators in einem Röntgenstrahlbild eines Zielgegenstands vorhanden sind, an dem ein oder mehrere Bildqualitätsindikatoren angebracht sind und der durch Strahlung radiografisch abgebildet wird, Vorverarbeiten des Drahtbereichsbilds;
Binarisieren (S440) des Drahtbereichsbilds;
Detektieren (S450) von Linien im Drahtbereichsbild;
Zählen (S460) einer Anzahl von Drähten jedes Bildqualitätsindikators gemäß den detektierten Linien; und
Bewerten (S350) einer Qualität des Röntgenstrahlbilds gemäß der Anzahl der Drähte;
**dadurch gekennzeichnet, dass**:
- das Detektieren (S450) von Linien im Drahtbereichsbild Folgendes umfasst: Transformieren von Pixeln des Drahtbereichsbilds durch ein Polarkoordinatensystem, um mehrere Kurven zu erzeugen, Organisieren von Punkten, an denen sich die mehreren Kurven kreuzen, in eine Akkumulationsmatrix, Detektieren mehrerer Linien aus mehreren Punkten, deren Akkumulationsmatrixwert größer oder gleich einem Schwellenwert ist, und Durchführen einer Gruppierung auf der Grundlage einer Dichte der mehreren Linien, um die mehreren Linien in eine oder mehrere Liniengruppen zu gruppieren.

2. Verfahren nach Anspruch 1, wobei beim Zählen (S460) der Anzahl der Drähte jedes Bildqualitätsindikators die Anzahl der Drähte jedes Bildqualitätsindikators gemäß einer Anzahl von Liniengruppen gezählt wird.

3. Verfahren nach einem der vorhergehenden Ansprüche, wobei das Vorverarbeiten des Drahtbereichsbilds Folgendes umfasst:
Normieren (S420) des Drahtbereichsbilds, um das Drahtbereichsbild in ein vorgegebenes Format umzusetzen; und
Durchführen (S430) einer Bildverarbeitung auf dem Drahtbereichsbild, um eine Differenz zwischen Pixeln, die die Linien im Drahtbereichsbild bilden, und restlichen Pixeln darin hervorzuheben.

4. Verfahren nach Anspruch 3, wobei das Normieren (S420) des Drahtbereichsbilds Folgendes umfasst:
Drehen des Drahtbereichsbilds in einer vorgegebenen Richtung; und/oder
Ändern der Größe des Drahtbereichsbilds auf eine vorgegebene Größe.

5. Verfahren nach Anspruch 3 oder 4, wobei das Durchführen (S430) der Bildverarbeitung Folgendes umfasst:
Durchführen eines Prozesses einer kontrastlimitierten adaptiven Histogramm-Equalisierung, CLAHE, auf dem Drahtbereichsbild, um die Eindeutigkeit der Linien, die im Drahtbereichsbild vorhanden sind, zu erhöhen, Rauschen aus dem Röntgenstrahlbild zu entfernen und Helligkeit und Kontrast zu erhöhen; und/oder
Durchführen einer Filterung unter Verwendung eines oder mehrerer Filter in einem Frequenzbereich des Drahtbereichsbilds; und/oder
Durchführen einer Filterung unter Verwendung eines Sobel-Filters in der oberen und der unteren Richtung in Bezug auf eine Y-Achse im Drahtbereichsbild, um eine Begrenzung einer vertikalen Komponente jeder Linie, die im Drahtbereichsbild vorhanden ist, zu detektieren.

6. Verfahren nach Anspruch 5, wobei das Durchführen der Filterung unter Verwendung eines oder mehrerer Filter Folgendes umfasst:
Transformieren des Drahtbereichsbilds durch den Frequenzbereich, um ein Frequenzbereichsbild zu erzeugen;
Durchführen einer Frequenzbereichsfilterung unter Verwendung eines zusammengesetzten Filters, der Filter von mindestens zweien der folgenden Filter kombiniert: ein Tiefpassfilter, um zu ermöglichen, dass lediglich Tiefbandkomponenten des Frequenzbereichsbilds hindurchtreten, ein Vertikalgewichtungsfilter zum Multiplizieren der vertikalen Komponente im Frequenzbereichsbild mit einer vorgegebenen Gewichtung, ein Stundenglas-förmiges Filter zum Durchführen der Beseitigung eines oberen und eines unteren Bereichs von Bereichen, die durch zwei verschiedene Liniensegmente geteilt sind, die durch einen Referenzpunkt verlaufen, während sie in Bezug auf den Referenzpunkt vertikal symmetrisch sind, im Frequenzbereichsbild und ein Butterworth-Filter zum Verringern von Phasenverzerrung in einem Begrenzungsbereich einer gefilterten Frequenz im Frequenzbereichsbild; und
inverses Transformieren des Frequenzbereichsbilds aus dem Frequenzbereich in einen Zeitbereich durch die Vorverarbeitungseinheit (410).

7. Verfahren nach Anspruch 6, wobei das Butterworth-Filter gemäß der folgenden Gleichung erzeugt wird: $G \left(w\right) = \frac{1}{\sqrt{1 + {w}^{2 n}}} ,$ wobei w die Frequenz bezeichnet und n eine Filterordnung bezeichnet.

8. Verfahren nach einem der vorhergehenden Ansprüche, wobei das Binarisieren des Drahtbereichsbilds das Binarisieren des Drahtbereichsbilds durch Einstellen oberer Pixelwerte, die ein vorgegebenes Verhältnis in einer Pixelwertverteilung des Drahtbereichsbilds aufweisen, als einen Schwellenwert umfasst.

9. Verfahren nach Anspruch 8, wobei das Binarisieren (S440) des Drahtbereichsbilds ferner das Durchführen eines Morphologievorgangs auf dem Drahtbereichsbild umfasst, und
der Morphologievorgang einen Erosionsvorgang zum Entfernen von Rauschen aus dem Drahtbereichsbild und/oder einen Dilatationsvorgang zum Ausdehnen der Linien des Drahtbereichsbilds umfasst.

10. Vorrichtung zur Qualitätsbewertung, wobei die Vorrichtung Folgendes umfasst:
eine Vorverarbeitungseinheit (410), die konfiguriert ist, das Drahtbereichsbild vorzuverarbeiten, wenn ein Drahtbereichsbild eingegeben wird, wobei das Drahtbereichsbild ein Bild eines Bereichs ist, in dem Drähte jedes Bildqualitätsindikators in einem Röntgenstrahlbild eines Zielgegenstands vorhanden sind, an dem ein oder mehrere Bildqualitätsindikatoren angebracht sind und der durch Strahlung radiografisch abgebildet wird;
eine Binarisierungseinheit (420), die konfiguriert ist, das Drahtbereichsbild zu binarisieren;
eine Liniendetektionseinheit (430), die konfiguriert ist, Linien im Drahtbereichsbild zu detektieren;
eine Zähleinheit (440), die konfiguriert ist, eine Anzahl von Drähten jedes Bildqualitätsindikators gemäß den detektierten Linien zu zählen; und
eine Bewertungseinheit (500), die konfiguriert ist, eine Qualität des Röntgenstrahlbilds gemäß der Anzahl der Drähte zu bewerten;
**dadurch gekennzeichnet, dass**:
- die Liniendetektionseinheit (430) konfiguriert ist zum Transformieren von Pixeln des Drahtbereichsbilds durch ein Polarkoordinatensystem, um mehrere Kurven zu erzeugen, Organisieren von Punkten, an denen sich die mehreren Kurven kreuzen, in eine Akkumulationsmatrix, Detektieren mehrerer Linien aus mehreren Punkten, deren Akkumulationsmatrixwert größer oder gleich einem Schwellenwert ist, und Durchführen einer Gruppierung auf der Grundlage einer Dichte der mehreren Linien, um die mehreren Linien in eine oder mehrere Liniengruppen zu gruppieren.

11. Vorrichtung nach Anspruch 10, wobei die Zähleinheit (440) konfiguriert ist, die Anzahl der Drähte jedes Bildqualitätsindikators gemäß einer Anzahl von Liniengruppen zu zählen.

12. Vorrichtung nach Anspruch 10, wobei die Vorverarbeitungseinheit (410) konfiguriert ist zum:
Normieren des Drahtbereichsbilds, um das Drahtbereichsbild in ein vorgegebenes Format umzusetzen; und
Durchführen einer Bildverarbeitung auf dem Drahtbereichsbild, um eine Differenz zwischen Pixeln, die die Linien im Drahtbereichsbild bilden, und restlichen Pixeln darin hervorzuheben.

13. Vorrichtung nach Anspruch 12, wobei die Vorverarbeitungseinheit (410) konfiguriert ist, das Drahtbereichsbild in einer vorgegebenen Richtung zu drehen und die Größe des Drahtbereichsbilds auf eine vorgegebene Größe zu ändern.

## Revendications

1. Procédé d'évaluation de la qualité, le procédé comportant de :
lorsqu'une image de zone de fils est entrée (S410), dans lequel l'image de zone de fils est une image d'une zone où des fils de chaque indicateur de qualité d'image existent dans une image radiographique d'un objet cible qui est lié à un ou plusieurs indicateurs de qualité d'image et radiographié par rayonnement, prétraiter l'image de zone de fils ;
binariser (S440) l'image de zone de fils ;
détecter (S450) des lignes dans l'image de zone de fils ;
compter (S460) un nombre de fils de chaque indicateur de qualité d'image en fonction des lignes détectées ; et
évaluer (S350) une qualité de l'image radiographique en fonction du nombre de fils ;
**caractérisé en ce que** :
- la détection (S450) de lignes dans l'image de zone de fils comporte de : transformer des pixels de l'image de zone de fils par un système de coordonnées polaires pour générer une pluralité de courbes, organiser des points où la pluralité de courbes se coupent en une matrice d'accumulation, détecter une pluralité de lignes à partir d'une pluralité de points dont la valeur de matrice d'accumulation est supérieure ou égale à une valeur de seuil, et effectuer un regroupement sur la base d'une densité de la pluralité de lignes, de manière à regrouper la pluralité de lignes dans une ou plusieurs grappes de lignes.

2. Procédé selon la revendication 1, dans lequel, lors du comptage (S460) du nombre de fils de chaque indicateur de qualité d'image, le nombre de fils de chaque indicateur de qualité d'image en fonction d'un nombre de grappes de lignes est compté.

3. Procédé selon l'une quelconque des revendications précédentes, dans lequel le prétraitement de l'image de zone de fils comporte de :
normaliser (S420) l'image de zone de fils pour convertir l'image de zone de fils dans un format prédéfini ; et
réaliser (S430) un traitement d'image sur l'image de zone de fil afin de mettre en évidence une différence entre des pixels constituant les lignes dans l'image de zone de fils et des pixels restants dans celle-ci.

4. Procédé selon la revendication 3, dans lequel la normalisation (S420) de l'image de zone de fils comporte de :
faire tourner l'image de zone de fils dans une direction prédéfinie ; et/ou
redimensionner l'image de zone de fils à une taille prédéfinie.

5. Procédé selon la revendication 3 ou 4, dans lequel la réalisation (S430) du traitement d'image comporte au moins une étape parmi :
exécuter un processus d'égalisation adaptative d'histogramme à contraste limité, CLAHE, sur l'image de zone de fils pour augmenter la clarté des lignes existant dans l'image de zone de fils, éliminer le bruit de l'image radiographique et augmenter la luminosité et le contraste ;
réaliser un filtrage en utilisant un ou plusieurs filtres dans un domaine fréquentiel de l'image de zone de fils ; et
réaliser un filtrage en utilisant un filtre de Sobel dans des directions vers le haut et vers le bas par rapport à un axe Y dans l'image de zone de fils afin de détecter une frontière d'une composante verticale de chaque ligne existant dans l'image de zone de fils.

6. Procédé selon la revendication 5, dans lequel la réalisation d'un filtrage en utilisant un ou plusieurs filtres comporte de :
transformer l'image de zone de fils par le domaine fréquentiel pour générer une image dans le domaine fréquentiel ;
réaliser un filtrage dans le domaine fréquentiel en utilisant un filtre composite combinant des filtres d'au moins deux types parmi : un filtre passe-bas pour ne laisser passer que des composantes de bande basse de l'image dans le domaine fréquentiel, un filtre de pondération verticale pour multiplier la composante verticale dans l'image dans le domaine fréquentiel par une pondération prédéterminée, un filtre en forme de sablier pour procéder à l'élimination des zones supérieure et inférieure parmi des zones divisées par deux segments de ligne différents passant par un point de référence tout en étant verticalement symétriques par rapport au point de référence dans l'image dans le domaine fréquentiel, et un filtre de Butterworth pour réduire la distorsion de phase dans une zone de frontière d'une fréquence en cours de filtrage dans l'image dans le domaine fréquentiel ; et transformer de manière inversée, par l'unité de prétraitement (410), l'image dans le domaine fréquentiel du domaine fréquentiel à un domaine temporel.

7. Procédé selon la revendication 6, dans lequel le filtre de Butterworth est créé d'après une équation : $G \left(w\right) = \frac{1}{\sqrt{1 + {w}^{2 n}}} ,$ où w représente la fréquence et n représente un ordre de filtrage.

8. Procédé selon l'une quelconque des revendications précédentes, dans lequel la binarisation de l'image de zone de fils comporte de binariser l'image de zone de fils en fixant des valeurs de pixels supérieures ayant un rapport prédéterminé dans une distribution de valeurs de pixels de l'image de zone de fils comme une valeur de seuil.

9. Procédé selon la revendication 8, dans lequel la binarisation (S440) de l'image de zone de fils comporte en outre d'exécuter une opération de morphologie sur l'image de zone de fils, et
l'opération de morphologie comporte au moins un élément parmi : une opération d'érosion pour éliminer le bruit de l'image de zone de fils et une opération de dilatation pour étendre les lignes de l'image de zone de fils.

10. Dispositif d'évaluation de la qualité, le dispositif comportant :
une unité de prétraitement (410) configurée pour prétraiter l'image de zone de fils, lorsqu'une image de zone de fils est entrée, dans lequel l'image de zone de fils est une image d'une zone où des fils de chaque indicateur de qualité d'image existent dans une image radiographique d'un objet cible qui est lié à un ou plusieurs indicateurs de qualité d'image et radiographié par rayonnement ;
une unité de binarisation (420) configurée pour binariser l'image de zone de fils ;
une unité de détection de lignes (430) configurée pour détecter des lignes dans l'image de zone de fils ;
une unité de comptage (440) configurée pour compter un nombre de fils de chaque indicateur de qualité d'image en fonction des lignes détectées ; et
une unité d'évaluation (500) configurée pour évaluer une qualité de l'image radiographique en fonction du nombre de fils ;
**caractérisé en ce que** :
- l'unité de détection de lignes (430) est configurée pour : transformer des pixels de l'image de zone de fils par un système de coordonnées polaires pour générer une pluralité de courbes, organiser des points où la pluralité de courbes se coupent en une matrice d'accumulation, détecter une pluralité de lignes à partir d'une pluralité de points dont la valeur de matrice d'accumulation est supérieure ou égale à une valeur de seuil, et effectuer un regroupement sur la base d'une densité de la pluralité de lignes, de manière à regrouper la pluralité de lignes dans une ou plusieurs grappes de lignes.

11. Dispositif selon la revendication 10, dans lequel l'unité de comptage (440) est configurée pour compter le nombre de fils de chaque indicateur de qualité d'image en fonction d'un nombre de groupes de lignes.

12. Dispositif selon la revendication 10, dans lequel l'unité de prétraitement (410) est configurée pour :
normaliser l'image de zone de fils pour convertir l'image de zone de fils dans un format prédéfini ; et
réaliser un traitement d'image sur l'image de zone de fils afin de mettre en évidence une différence entre des pixels constituant les lignes dans l'image de zone de fils et des pixels restants dans celle-ci.

13. Dispositif selon la revendication 12, dans lequel l'unité de prétraitement (410) est configurée pour faire tourner l'image de zone de fils dans une direction prédéfinie et redimensionner l'image de zone de fils à une taille prédéfinie.
